# EUROPÄISCHE PATENTSCHRIFT

(11) **EP 1 856 867 B1**
(45) Veröffentlichungstag und Bekanntmachung des Hinweises auf die Patenterteilung: **20.02.2013**
(21) Anmeldenummer: 05812547.7
(22) Anmeldetag: 02.12.2005
(51) Int. Cl.: H04L 25/02

(54) **TRANSCEIVER MIT EINEM EINSTELLBAREN TERMINIERUNGSNETZWERK FÜR EIN STEUERGERÄT**
TRANSCEIVER WITH ADJUSTABLE TERMINAL NETWORK FOR A CONTROL DEVICE
EMETTEUR-RECEPTEUR A RESEAU DE TERMINAISONS REGLABLE POUR UN APPAREIL DE COMMANDE

(30) Priorität: 24.02.2005 DE 102005009491
(43) Veröffentlichungstag der Anmeldung: 21.11.2007
(73) Patentinhaber: Volkswagen Aktiengesellschaft, 38440 Wolfsburg (DE)
(72) Erfinder: LANGE, Klaus, 38108 Braunschweig (DE); SCHANZE, Carsten, 38448 Wolfsburg (DE)
(74) Vertreter: Zucker, Volker
(86) Internationale Anmeldenummer: PCT/EP2005/013052
(87) Internationale Veröffentlichungsnummer: WO 2006/089573

(56) Entgegenhaltungen:
- DE-A1- 4 142 081

## Beschreibung

Die Erfindung betrifft einen Transceiver für ein Steuergerät gemäß dem Oberbegriff des Anspruchs 1.

Es ist bekannt, in einen Kraftfahrzeug eine Vielzahl von Funktionsmodulen anzuordnen, die beispielsweise dem Motormanagement, der Karosserieelektronik sowie einer besonderen Ausstattung des Fahrzeuges, wie Radio, Autotelefon oder Navigationssystem zugeordnet werden können. Es ist auch bekannt, die einzelnen Funktionsmodule zum Datenaustausch und zur Ansteuerung mit einem Bussystem, beispielsweise einem CAN-Bus, zu verbinden, wobei auch für jede der oben genannten Gruppen ein gesonderter Bus vorgesehen sein kann. Die Bussysteme können über ein Gateway zum Austausch von Daten und Steuerbefehlen miteinander verbunden sein. Dabei werden bevorzugt die Funktionsmodule, die einen schnellen Datenaustausch benötigen, wie die Steuergeräte für Motor und Getriebe, sowie andere Komponenten, die für die Funktionalität und Sicherheit essentiell sind, an einen so genannten High-Speed-Bus und die weniger zeitkritischen Komponenten, die beispielsweise besondere Ausstattungen unterstützen, an einen so genannten Low-Speed- oder Komfort-Bus angeschlossen.

Die Funktionsmodule bzw. Steuergeräte umfassen einen Controller und einen Transceiver, wobei es die Hauptaufgabe des Transceivers ist, eine physikalische Schnittstelle zum Bussystem herzustellen. Dabei erfolgt im Transceiver eine Pegelanpassung der empfangenen bzw. zu sendenden Nachrichten.

Da die Übertragungsraten in den Bussystemen relativ hoch sind, muss die Reflexion an den Stoßstellen reduziert werden. Hierbei sind prinzipiell zwei unterschiedliche Ansätze bekannt.

Bei der dezentralen Terminierung wird an den beiden Enden des Bussystems jeweils ein Abschlusswiderstand angeordnet, der gleich dem Wellenwiderstand der Busleitung ist, wobei die beiden Wellenwiderstände beispielsweise in den jeweils letzten Steuergeräten am Ende des Bussystems angeordnet werden. Ein typischer Wert für den Wellenwiderstand ist beispielsweise 120 Ω für eine verdrillte Doppelleitung. Ein Problem der dezentralen Terminierung ist, dass nicht immer der Aufbau im Voraus bekannt ist. Dadurch ist aber nicht bekannt, wo das Ende des Bussystems ist. Des Weiteren ist auch bei sternförmigen Busstrukturen ein Anfang und Ende nicht eindeutig festlegbar.

Eine Alternative zur dezentralen Terminierung ist daher die zentrale Terminierung. Bei dieser erfolgt der Abschluss zentral beispielsweise in einem Steuergerät, wobei hierzu typischerweise der halbe Wellenwiderstand als Abschlusswiderstand gewählt wird. Dies stellt einen vernünftigen Kompromiss dar, um zentral die Reflexionen zu minimieren.

Gemeinsam ist beiden Konzepten zur Terminierung, dass die an der Terminierung des Bussystems nicht beteiligten Steuergeräte möglichst hochohmig, beispielsweise im Kiloohmbereich abgeschlossen werden.

Die jeweiligen Abschlusswiderstände werden zusammen mit gegebenenfalls notwendigen Elementen eines Stütznetzwerkes und/oder Filtern als diskrete Bauelemente am Transceiver angeordnet. Aufgrund der Tatsache, dass ein Steuergerät einmal Bestandteil einer dezentralen oder einer zentralen Terminierung sein kann oder aber gar nicht zur Terminierung beiträgt, muss der Abschlusswiderstand je nach Busstruktur angepasst werden. Dies kann entweder manuell durch Auswechseln der Widerstände erfolgen oder aber das gleiche Steuergerät wird in drei Varianten mit verschiedenen Abschlusswiderständen gefertigt, was jeweils sehr aufwendig und kostspielig ist.

Aus der DE 198 54 117 A1 ist eine Schaltungsanordnung zur Kommunikation einer Vielzahl elektrischer Komponenten in einem Kraftfahrzeug bekannt, umfassend mindestens einen Bus zur Übertragung von Daten zwischen den davon über Netzknoten angeschlossenen Komponenten und mindestens einem Abschlusswiderstand, wobei der mindestens eine Abschlusswiderstand in seinem Widerstandswert einstellbar ist. Der Abschlusswiderstand wird bevorzugt elektronisch eingestellt und ist beispielsweise als digitales Potentiometer ausgebildet. Des Weiteren wird vorgeschlagen, dass alle Netzknoten einen einstellbaren Abschlusswiderstand zugeordnet bekommen. Je nach Art der verwendeten einstellbaren Widerstände kann die Anpassung des Gesamtwiderstandes auf verschiedene Weise vorgenommen werden. Bei einem bevorzugten Ausführungsbeispiel wertet einer der Netzknoten die Statusmeldungen der übrigen am Bus angeschlossenen Netzknoten aus und passt selbsttätig seinen Abschlusswiderstand an. Die Anpassung kann vorteilhaft auch von einem internen Steuergerät am Bus selbsttätig erfolgen, das den Gesamtwiderstand misst und danach die Abschlusswiderstände aller Teilnehmer justiert. Schließlich kann die Anpassung noch durch ein am Bus angeschaltetes externes Diagnosegerät vorgenommen werden, und zwar sowohl bei der Fertigung, beispielsweise nach Montage aller Funktionsmodule an einem Bus, oder beim Service in der Werkstatt zur Wartung oder zur Neujustierung nach Einbau oder Ausbau von Modulen. Dies ermöglicht Vereinfachungen bei der Herstellung und beim späteren Umbau der Kraftfahrzeuge, so dass nur eine geringe Anzahl von Steuergeräte-Varianten benötigt wird. Wenn die einstellbaren Widerstände in den Netzkonten integriert sind, wird auch eine gesonderte Bestückung mit Abschlusswiderständen überflüssig.

Aus der DE 41 42 081 A1 ist ein Abschlussschaltkreis zum Abschluss einer Datenbusleitung mit einer Stromversorgungsleitung, einer Erdungsleitung, einer ersten Signalleitung und einer zweiten Signalleitung zur Übertragung von Signalen mit zueinander entgegengesetzten Polaritäten bekannt, wobei ein Stellglied mit einem Eingangsanschluss vorgesehen ist, das mit der Stromversorgungsleitung verbunden ist, zur Einstellung einer an den Eingangsanschluss angelegten Spannung auf einen konstanten Spannungswert, der an dem Ausgangsanschluss des Stellglieds ausgegeben wird. Weiter weist der Abschlussschaltkreis einen ersten Abschlusswiderstand mit einem ersten Anschluss auf, der mit dem Ausgangsanschluss des Stellgliedes verbunden ist. Weiter weist der Abschlussschaltkreis einen zweiten Abschlusswiderstand, der mit dem Ausgangsanschluss des Stellgliedes verbunden ist, sowie einen dritten Abschlusswiderstand auf, dessen beide Anschlüsse mit den jeweils zweiten Anschlüssen des ersten Abschlusswiderstandes und des zweiten Abschlusswiderstands verbunden sind. Dabei kann der Abschlussschaltkreis als monolithisch integrierter Schaltkreis ausgebildet sein.

Aus der DE 100 20 142 A1 ist ein Bussystem bekannt, umfassend eine Busstruktur, an der elektrische Komponenten angeschlossen sind, wobei den Komponenten ein Fehlerzähler und ein Abschlusswiderstand zugeordnet ist, wobei der Abschlusswiderstand einstellbar ausgebildet ist und in Abhängigkeit der erfassten Fehlerdichte des Fehlerzählers verstellbar ist. Der einstellbare Abschlusswiderstand ist vorzugsweise als digitales Potentiometer ausgebildet und in der elektronischen Komponente angeordnet.

Ausgehend von diesem Stand der Technik liegt der Erfindung das technische Problem zugrunde, einen Transceiver zu schaffen, mittels dessen die Terminierung an ein Bussystem vereinfacht wird.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu umfasst der Transceiver ein einstellbareres Terminierungsnetzwerk, mittels dessen mindestens drei Abschlusswiderstandswerte einstellbar sind, wobei das Terminierungsnetzwerk und der Transceiver-Kern monolithisch in einer Halbleiterschaltung integriert sind. Durch die Integration des Terminierungsnetzwerkes in dem Transceiver entfalten separate Widerstände oder Potentiometer, was insbesondere hinsichtlich der Kosten und der Zuverlässigkeit von Interesse ist, da durch die monolithische Integration Zuleitungen eingespart werden. Weiter nutzt die Erfindung die Erkenntnis aus, dass eine relativ kontinuierliche Einstellmöglichkeit häufig nicht notwendig ist. Vielmehr reicht meistens bereits eine Umschaltmöglichkeit zwischen unterminiert und zentralem bzw. dezentralem Abschluss, wobei eine Einstellbarkeit aller drei Zustände vorgesehen ist. Eine derartige Einstellbarkeit zwischen drei Widerstandswerten lässt sich sehr einfach in einen IC integrieren. Des Weiteren vereinfacht dies die Einstellung erheblich. Der Transceiver muss nur einmal mitgeteilt bekommen, beispielsweise von seinem zugeordneten Controller-Modul, in welcher Funktion dieser verbaut wird. Dieser stellt dann den zugehörigen Widerstandswert ein (hochohmig, Wellenwiderstand oder halber Wellenwiderstand).

In einer bevorzugten Ausführungsform umfasst der Transceiver zwei Anschlüsse zum Anschließen an ein Zwei-Draht-Bussystem wie beispielsweise CAN oder Flex Ray.

In einer weiteren bevorzugten Ausführungsform sind zwischen den Anschlüssen zwei erste, zweite und dritte Terminierungswiderstände jeweils in Reihe geschaltet, wobei die Mittelabgriffe der Reihen elektrisch verbunden sind und die zweiten und dritten Terminierungswiderstände zu- und/oder abschaltbar sind. Dabei bilden die ersten zwei Terminierungswiderstände den hochohmigen unterminierten Anschluss, die zum tragen kommen, wenn die anderen vier Widerstände abgeschaltet sind. Die anderen vier Widerstände weisen vorzugsweise den Widerstandswert des Wellenwidertandes der Leitung auf. Werden also die beiden zweiten Terminierungswiderstände zugeschaltet, so wird der Transceiver mit dem Wellenwiderstand der Busleitung abgeschlossen, so dass der Transceiver als Abschluss einer dezentralen Terminierung wirkt. Werden dann zusätzlich noch die beiden dritten Terminierungswiderstände zugeschaltet, so ist der resultierende Abschlusswiderstand ungefähr gleich dem halben Wellenwiderstand, so dass der Transceiver als Abschluss einer zentralen Terminierung wirkt.

In einer weiteren bevorzugten Ausführungsform sind den Terminierungswiderständen Schalter oder Sicherungen zugeordnet. Der Vorteil der Schalter ist dabei die reversible Einstellung des resultierenden Widerstandswertes, wobei dies jedoch aufgrund der Ausbildung als aktives Bauelement eine permanente Versorgung des Transceiverbausteins erfordert, da sich der eingestellte Terminierungswiderstand nicht ändern sollte. Durch die Verwendung von Sicherungen kann dieses Problem gelöst werden, wobei dann jedoch die Einstellung irreversibel ist.

In einer weiteren bevorzugten Ausführungsform sind die Schalter als Transistoren ausgebildet.

In einer weiteren bevorzugten Ausführungsform wird in den Transceiver ein Stütznetzwerk integriert, das zwischen Versorgungsspannung und Masse liegt. Dieses Stützwerk ist mit dem Mittelabgriff der Terminierungswiderstände verbunden.

In einer weiteren bevorzugten Ausführungsform ist in den Transceiver zusätzlich ein Filter integriert.

Die Erfindung wird nachfolgen anhand eines bevorzugten Ausführungsbeispiels näher erläutert. Die Fig. zeigen:
- Fig. 1:: einen Transceiver mit integriertem Terminierungsnetzwerk mit Schaltern und
- Fig. 2:: einen Transceiver mit integriertem Terminierungsnetzwerk mit Sicherungen.

Der Transceiver 1 umfasst einen Transceiver-Kern 2, einen Filter 3, ein Stütznetzwerk 4 und ein Terminierungsnetzwerk 5. Das Terminierungsnetzwerk 5 umfasst zwei erste Terminierungswiderstände RT1, RT2, die in Reihe zwischen zwei Anschlüssen BUS_{HIGH}, BUS_{LOW} geschaltet sind, wobei die Anschlüsse BUS_{HIGH}, BUS-_{LOW} die Schnittstelle zu den Busleitungen darstellen. Parallel zu der ersten Reihenschaltung aus RT1, RT2 sind zwei weitere Terminierungswiderstände RT3, RT4 sowie zwei dritte Terminierungswiderstände RT5, RT6 angeordnet, wobei alle Mittelabgriffe der Reihenschaltung über eine gemeinsame Leitung V_{CM} miteinander verbunden sind. Des Weiteren ist jedem Terminierungswiderstand RT3 - RT6 der zweiten und dritten Reihenschaltung ein Schalter zugeordnet. Wie der gestrichelten Linie zwischen den Schaltern der Terminierungswiderstände RT3 und RT4 bzw. RT5 und RT6 zu entnehmen ist, werden die Schalter einer Reihenschaltung stets gleichsinnig geschaltet, d. h., beide Schalter sind offen oder geschlossen. Das Stütznetzwerk 4 umfasst zwei Widerstände RMC1 und RMC2, die in Reihe geschaltet sind und zwischen der Versorgungsspannung V_{CC} und der Masse GND liegen. Der Mittelabgriff der Reihenschaltung von RMC1 und RMC2 ist dabei mit der Leitung V_{CM} verbunden. Neben den dargestellten Widerständen kann dabei das Stütznetzwerk 4 noch Kapazitäten enthalten, die hier aber nicht näher beschrieben werden sollen. Die Hauptfunktion des Stütznetzwerkes 4 ist die Unterstützung des rezessiven Spannungspegels auf der Busleitung. Der Filter 3 dient zur Erhöhung der Störfestigkeit im Bereich von 15 - 25 MHz. Die Funktionsweise des Terminierungsnetzwerkes 5 ist nun, bedarfsweise je nach Verschaltung des Transceivers, den geeigneten Abschlusswiderstandswert einzustellen. Hierzu sind die Fälle zu unterscheiden, nämlich der Transceiver 1 ist am angepassten Abschluss der Busleitung nicht beteiligt, der Transceiver 1 ist Bestandteil einer dezentralen Terminierung oder soll zentral die Busleitung terminieren.

Im ersten Fall bleiben die vier Schalter offen, so dass die Terminierungswiderstände RT3 - RT6 von den Anschlüssen BUS_{HIGH}, BUS_{LOW} abgekoppelt sind. In diesem Fall wirken nur die beiden Terminierungswiderstände RT1, RT2, die den Transceiver relativ hochohmig gegen die Busleitung abschließen.

Im zweiten Fall der dezentralen Terminierung soll der Transceiver den Bus mit dem Wellenwiderstand abschließen. Hierzu wurden die Schalter von den Terminierungswiderständen RT3, RT4 geschlossen. Sind nun die Widerstandswerte von RT3 = RT4 =Z_{L}, so ist der resultierende Widerstandswert ungefähr dem Wellenwiderstand Z_{L} der Leitung (unter Vernachlässigung des hochohmigen Spannungsteilers RT1, RT2).

Im dritten Fall wurden zusätzlich noch die Schalter der Terminierungswiderstände RT5, RT6 geschlossen, die vorzugsweise ebenfalls ungefähr dem Wellenwiderstand entsprechen. Daher stellt sich ungefähr der halbe Wellenwiderstand als Abschlusswiderstand ein.

Die Information, welcher Widerstandswert eingestellt werden soll, kann dem Transceiver beispielsweise über einen Schalter mitgeteilt werden. Alternativ kann die Information auch vom Controller-Modul an den Transceiver 1 übertragen werden. Dem Controller-Modul wiederum kann diese Information auch wieder über einen Schalter oder ein programmierbares Interface mitgeteilt werden.

Der Filter 3 beinhaltet üblicherweise Induktivitäten, so dass auf diesen aus Platz- und Fertigungsgründen bei der Integration verzichtet werden kann. Auch das Stütznetzwerk 4 muss gegebenenfalls nicht mit in den Transceiver 1 integriert werden, sondern kann extern durch diskrete Widerstände oder in Hybridtechnik realisiert werden.

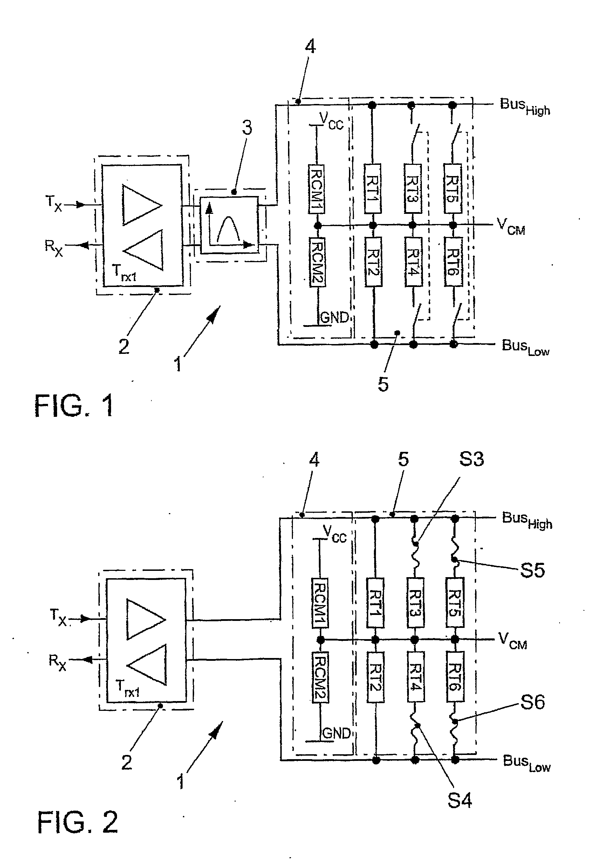

In der Fig. 2 ist eine alternative Ausführungsform eines Transceivers 1 ohne Filter dargestellt, wobei die Schalter an den Terminierungswiderständen RT3 - RT6 durch Sicherungen S3 - S6 ersetzt wurden. Dabei sind die Sicherungen S5 und S6 derart dimensioniert, dass diese bereits bei geringeren Stoßströmen durchbrennen als die Sicherungen S3 und S4. Je nach gewünschtem Anwendungsfall werden dann entweder alle vier Sicherungen ausgelöst (unterminiert), oder nur die Sicherungen S5 und S6 ausgelöst (dezentrale Terminierung) oder keine Sicherung ausgelöst (zentrale Terminierung). Der Stromstoß kann dabei über den Transceiver-Kern 2 oder das Controller-Modul ausgelöst werden, wobei die jeweilige Höhe oder Dauer beispielsweise wieder durch einen Schalter eingestellt wird.

Alternativ ist es auch denkbar, das Terminierungsnetz als separate Schaltung aufzubauen. In diesem Fall kann dann beispielsweise das Terminierungsnetzwerk zusammen mit dem Stütznetzwerk und/oder dem Filter als eigener Baustein ausgebildet sein, wobei die Integration vorzugsweise in Hybridtechnik erfolgt.

## Patentansprüche

1. Transceiver für ein Steuergerät, umfassend einen Transceiver-Kern, mittels dessen eine Pegelanpassung empfangener oder zu sendender Nachrichten erfolgt, wobei in dem Transceiver (1) ein einstellbares Terminierungsnetzwerk (5) angeordnet ist, wobei das Terminierungsnetzwerk (5) und der Transceiver-Kern (2) monolithisch in einer Halbleiterschaltung integriert sind,
**dadurch gekennzeichnet, dass**
mittels des Terminierungsnetzwerkes (5) mindestens drei Abschlusswiderstandswerte einstellbar sind, wobei die drei einstellbaren Abschlusswiderstandswerte hochohmig, Wellenwiderstand und halber Wellenwiderstand sind.

2. Transceiver nach Anspruch 1, **dadurch gekennzeichnet, dass** der Transceiver (1) zwei Anschlüsse (BUS_{HIGH}, BUS_{LOW}) zum Anschließen an ein Zwei-Draht-Bussystem umfasst.

3. Transceiver nach Anspruch 2, **dadurch gekennzeichnet, dass** zwischen den Anschlüssen (BUS_{HIGH}, BUS_{LOW}) zwei erste Terminierungswiderstände (RT1, RT2) in Reihe geschaltet, zwei weitere Terminierungswiderstände (RT3, RT4) in Reihe geschaltet und zwei dritte Terminierungswiderstände (RT5, RT6) in Reihe geschaltet sind, wobei die Mittelabgriffe der Reihen elektrisch verbunden sind und die zweiten und dritten Terminierungswiderstände (RT3 - RT6) zu- und/oder abschaltbar sind.

4. Transceiver nach Anspruch 3, **dadurch gekennzeichnet, dass** den Terminierungswiderständen (RT3 - RT6) Schalter oder Sicherungen (S3 - S6) zugeordnet sind.

5. Transceiver nach Anspruch 4, **dadurch gekennzeichnet, dass** die Schalter als Transistoren ausgebildet sind.

6. Transceiver nach einem der vorangegangenen Ansprüche, **dadurch gekennzeichnet, dass** ein Stütznetzwerk (4) in den Transceiver (1) integriert ist.

7. Transceiver nach einem der vorangegangenen Ansprüche, **dadurch gekennzeichnet, dass** in dem Transceiver (1) ein Filter (3) integriert ist.

## Claims

1. Transceiver for a control device, comprising a transceiver core which is used to adjust the level of received messages or messages to be transmitted, an adjustable termination network (5) being arranged in the transceiver (1), and the termination network (5) and the transceiver core (2) being monolithically integrated in a semiconductor circuit,
**characterized in that**
the termination network (5) can be used to adjust at least three terminating resistance values, the three adjustable terminating resistance values being high impedance, characteristic impedance and half characteristic impedance.

2. Transceiver according to Claim 1, **characterized in that** the transceiver (1) comprises two connections (BUS_{HIGH}, BUS_{LOW}) for connection to a two-wire bus system.

3. Transceiver according to Claim 2, **characterized in that** two first termination resistors (RT1, RT2) are connected in series, two further termination resistors (RT3, RT4) are connected in series and two third termination resistors (RT5, RT6) are connected in series between the connections (BUS_{HIGH}, BUS_{LOW}), the centre taps of the series being electrically connected and the second and third termination resistors (RT3-RT6) being able to be connected and/or disconnected.

4. Transceiver according to Claim 3, **characterized in that** switches or fuses (S3-S6) are assigned to the termination resistors (RT3-RT6).

5. Transceiver according to Claim 4, **characterized in that** the switches are in the form of transistors.

6. Transceiver according to one of the preceding claims, **characterized in that** a supporting network (4) is integrated in the transceiver (1).

7. Transceiver according to one of the preceding claims, **characterized in that** a filter (3) is integrated in the transceiver (1).

## Revendications

1. Emetteur-récepteur pour appareil de commande, comportant une âme d'émetteur-récepteur au moyen de laquelle s'effectue une adaptation du niveau des messages reçus ou à émettre,
un réseau terminal ajustable (5) étant disposé dans l'émetteur-récepteur (1),
le réseau terminal (5) et l'âme (2) de l'émetteur-récepteur étant intégrés monolithiquement dans un circuit semi-conducteur,
**caractérisé en ce que**
au moins trois valeurs de résistance de clôture peuvent être réglées au moyen du réseau terminal (5), les trois valeurs réglables de résistance de clôture étant une résistance ohmique élevée, une résistance d'onde et une demi-résistance d'onde.

2. Emetteur-récepteur selon la revendication 1, **caractérisé en ce que** l'émetteur-récepteur (1) comporte deux bornes de raccordement (BUS_{HIGH}, BUS_{LOW}) qui permettent de le raccorder à un système de bus à deux fils.

3. Emetteur-récepteur selon la revendication 2, **caractérisé en ce que** deux premières résistances terminales (RT1, RT2) sont raccordées en série, deux autres résistances terminales (RT3, RT4) sont raccordées en série et deux troisièmes résistances terminales (RT5, RT6) sont raccordées en série entre les bornes de raccordement (BUS_{HIGH}, BUS_{LOW}), les bornes de prélèvement intermédiaire des séries étant reliées électriquement, les deuxièmes et troisièmes résistances terminales (RT3-RT6) pouvant être branchées et/ou débranchées.

4. Emetteur-récepteur selon la revendication 3, **caractérisé en ce que** des commutateurs ou des protections (S3-S6) sont associés aux résistances terminales (RT3-RT6).

5. Emetteur-récepteur selon la revendication 4, **caractérisé en ce que** les commutateurs sont configurés comme transistors.

6. Emetteur-récepteur selon la revendication selon l'une des revendications précédentes, **caractérisé en ce qu'**un réseau de soutien (4) est intégré dans l'émetteur-récepteur (1).

7. Emetteur-récepteur selon la revendication en ce qu'un filtre (3) est intégré dans l'émetteur-récepteur (1).
